# EUROPEAN PATENT SPECIFICATION

(11) **EP 4 302 957 B1**
(45) Date of publication and mention of the grant of the patent: **29.10.2025**
(21) Application number: 22762665.2
(22) Date of filing: 03.03.2022
(51) Int. Cl.: B29B 17/00, C08J 11/06, B29B 17/02, B29B 17/04, B29L 9/00

(54) **METHOD FOR TREATING COMPLEX SHEETS**
VERFAHREN ZUR BEHANDLUNG VON KOMPLEXEN BLÄTTERN
PROCÉDÉ DE TRAITEMENT DE FEUILLES COMPLEXES

(30) Priority: 04.03.2021 ES 202130190
(43) Date of publication of application: 10.01.2024
(73) Proprietor: Riera I Boix, Daniel, 08472 Campins (ES)
(72) Inventor: Riera I Boix, Daniel, 08472 Campins (ES)
(74) Representative: Hernández Hernández, Carlos
(86) International application number: PCT/ES2022/070119
(87) International publication number: WO 2022/184961

(56) References cited:
- EP-A1- 3 725 485
- WO-A2-2018/109147
- CN-A- 101 054 446
- ES-A1- 2 398 079
- ES-A1- 2 398 079
- JP-A- 2001 334 248
- US-A1- 2005 175 801
- US-A1- 2006 178 442
- KATHARINA KAISER ET AL: "Recycling of Polymer-Based Multilayer Packaging: A Review", RECYCLING, vol. 3, no. 1, 22 December 2017 (2017-12-22), pages 1 - 26, XP055677073, DOI: 10.3390/recycling3010001
- BASF: "BASF's water-based Epotal - Recycling of multi-layer packaging materials", 4 October 2022 (2022-10-04), XP093129581, Retrieved from the Internet <URL:https://www.youtube.com/watch?v=RQi7yA4qbpE> [retrieved on 20240209]
- STAUSBERG FRIEDERIKE ET AL: "Joint News Release - Collaboration project shows: multilayer packaging can be separated and recycled on an industrial scale", 3 May 2023 (2023-05-03), pages 1 - 4, XP093129587, Retrieved from the Internet <URL:https://www.basf.com/global/documents/en/news-and-media/news-releases/2023/05/P202e_BASF_Joint_News_Release_Krones_Suedpack_BASF_TOMRA_FS.pdf> [retrieved on 20240209]
- CABANES A. ET AL: "A review on VOCs from recycled plastics", SUSTAINABLE MATERIALS AND TECHNOLOGIES, vol. 25, 1 September 2020 (2020-09-01), pages e00179, XP093052200, ISSN: 2214-9937, DOI: 10.1016/j.susmat.2020.e00179
- WALKER THEODORE W. ET AL: "Recycling of multilayer plastic packaging materials by solvent-targeted recovery and precipitation", SCIENCE ADVANCES, vol. 6, no. 47, 20 November 2020 (2020-11-20), US, XP093129898, ISSN: 2375-2548, DOI: 10.1126/sciadv.aba7599
- DATABASE COMPENDEX [online] ENGINEERING INFORMATION, INC., NEW YORK, NY, US; 20 November 2020 (2020-11-20), WALKER T W ET AL: "Recycling of multilayer plastic packaging materials by solvent-targeted recovery and precipitation", Database accession no. E20204909573320
- WALKER T W ET AL: "Recycling of multilayer plastic packaging materials by solvent-targeted recovery and precipitation", SCIENCE ADVANCES 20201120 AMERICAN ASSOCIATION FOR THE ADVANCEMENT OF SCIENCE USA, vol. 6, no. 47, 20 November 2020 (2020-11-20), XP093129898, DOI: 10.1126/SCIADV.ABA7599
- DATABASE MEDLINE [online] US NATIONAL LIBRARY OF MEDICINE (NLM), BETHESDA, MD, US; 5 October 2021 (2021-10-05), �GD�LER SIBEL ET AL: "Towards a Better Understanding of Delamination of Multilayer Flexible Packaging Films by Carboxylic Acids.", Database accession no. NLM33492767
- �GD�LER SIBEL ET AL: "Towards a Better Understanding of Delamination of Multilayer Flexible Packaging Films by Carboxylic Acids.", CHEMSUSCHEM 05 OCT 2021, vol. 14, no. 19, 5 October 2021 (2021-10-05), pages 4198 - 4213, XP093129888, ISSN: 1864-564X, DOI: 10.1002/cssc.202002877

## Description

### Technical field

The invention belongs to the field of waste treatment for its reuse and proposes a method for treating complex film in order to innocuously separate their components.

### Background art

Sheets made of polymers are used as raw materials for the manufacture of packaging of all kinds, especially for the food and pharmaceutical industries. The most commonly used polymer in packaging is polyethylene terephthalate (PET).

Fresh produce packs are usually made from complex sheets of PET plus another polymer, usually polyolefins, e.g., polyethylene (PE). The reason for this is that a package made from PET film alone is unsuitable for sealing with a transparent film (requiring long sealing times and high sealing temperatures), which is how these packages are usually presented to the public.

The PET and PE sheets are bonded together by an adhesive, most commonly ethylene vinyl acetate (EVA) or acrylic adhesive, although polyurethane is also used. A layer of ethyl vinyl alcohol (EVOH) may be placed on top of the adhesive to improve the gas barrier properties of PET. In some cases, a second layer of adhesive is placed on top of the EVOH layer. The sheets thus formed are referred to as PET/PE or PET/EVOH/PE.

The manufacture of packaging from polymer films produces offcuts of leftover material, which should be recycled. Used packaging can also be recycled. As plastics, recycling involves melting the material. The recycling of complex PET/PE or PET/EVOH/PE foils is problematic, because the melting of different materials results in a cloudy product, which cannot be reused for the production of transparent recycled packaging, but only coloured packaging. However, as coloured containers are less in demand, they have to be sold at a lower price and cannot be recycled indefinitely, because a PE film will have to be bonded to the simple sheet of recycled complex film, resulting in a progressive weakening of the resulting complex film. These problems are leading to surplus used PET/PE that cannot be recycled.

Because of the aforementioned problems, it is desirable to recycle PET/PE or PET/EVOH/PE packaging by first separating its constituent single sheets, so that the resulting recycled polymers can subsequently be used to make other recycled complex sheets with the same properties as the virgin raw material, e.g., they can be used to produce transparent packaging. However, the separation of the single sheets forming a complex film presents technical problems, due to the presence of the adhesive.

Various techniques have been described in the prior art for the processing of complex films comprising the separation of their various components. In EP2650324B1 (LINPAC PACKAGING LIMITED), 16/10/2013, "Process recycling of plastic products" the first material is physically separated by shearing and application of heat, preferably between 80° and 100°.

ES2211345 (NEOPLASTICA ESPAÑA, S.A.), 01/07/2004, "Procedimiento para la separación de polietilentereftalato a partir de láminas multicapa" [Procedure for the separation of polyethylene terephthalate from multilayer films] describes a method consisting of bringing the film into contact with a medium comprising water and an alcohol. ES2398079 (SULAYR GLOBAL SERVICE, S.L.), 13/03/2013, "Procedimiento para la obtención de RPET (polietilentereftalato recuperado) a partir de láminas complejas adhesivas con poliuretanos" [Procedure for obtaining RPET (recovered polyethylene terephthalate) from polyurethane adhesive complex films] uses alkaline bleach as a separating agent. WO2018109147A2 (SULAYR GLOBAL SERVICE, S.L.), 21/06/2018, "Method and apparatus for recycling packaging material," discloses a method for recycling multilayer packaging materials comprising at least one metal layer, typically aluminium, and at least one polymer layer, such as polyethylene terephthalate (PET) or polyethylene (PE). The method employs a separation fluid comprising water, a water-miscible C1-C4 monocarboxylic acid (e.g., acetic or formic acid), phosphoric acid, and sodium hydroxide, combined within a single solution. These components partially react to form alkali metal phosphates, typically aluminium phosphate, and alkali metal carboxylates, enabling delamination of the bonded layers under acidic conditions (pH range 2 to 4) at temperatures between 20°C and 90°C. However, the method disclosed in this document presents a safety concern related to the dissolution of the metal layer. The dissolution of aluminium results in the formation of gaseous hydrogen, which introduces an explosion hazard, posing significant risks in large-scale industrial applications. Therefore, there is a need for an improved process that mitigates this hazard while ensuring the effective separation of multilayer packaging materials. EP3725485A1 (BASF SE), 21/10/2020, "METHOD OF RECYCLING FILM-TO-FILM LAMINATES" describes a method for breaking up complex films from used packaging, such as polyethylene terephthalate (PET)/adhesive/polyethylene (PE). To determine whether the method effectively separates such films, the laminating adhesive must satisfy specific experimental conditions, namely: (1) measuring the surface energy of a film of the laminating adhesive and (2) assessing a property related to the first and second polymeric films, specifically the water vapor transmission rate (WVTR) of each film. Said application further discloses an adhesive designed to exhibit a surface energy of at least 30 mN/m when both films have a WVTR of 10 g/m²/day or less, and at least 19 mN/m when either film exceeds this WVTR threshold. The separation of these films is achieved by treatment with an aqueous liquid having a pH ≥ 8 at temperatures ≥ 40°C. However, in a large-scale industrial process, verifying that the initial complex films meet the specified measurable characteristics presents a significant challenge, particularly given that the recycling mixture may lack homogeneity due to its varied origins. As a result, there is a need for an improved methodology to ensure reliable film separation while addressing potential inconsistencies arising from heterogeneous recycling streams.

The invention that is the subject of this patent proposes a method for breaking up complex films by separating their constituent elements through successive baths in water with agents that are harmless in that they do not give rise to unpleasant odours in the resulting product.

### Summary of the invention

The invention relates to a method of processing complex foils as defined in claim 1. Other embodiments are defined in the dependent claims.

The starting material for the realisation of the method are complex films, typically from waste from the extrusion and thermoforming industries, as well as post-consumer packaging.

Complex films are understood to be films composed of multiple single films, comprising at least one film of a first polymer and one film of a second polymer. The complex film comprises at least one layer of adhesive. The first polymer is polyethylene terephthalate (PET), the second polymer is polyethylene (PE) and the adhesive is of acrylic type or ethylene vinyl acetate (EVA).

The purpose of the invention is to recover the single sheets constituting the complex sheet, eliminating the remains of adhesive and other elements (EVOH, plastic particles of other colours, remains of metal), so that they can be reincorporated into the production lines as recycled materials.

The complex flakes must be shredded into small particle sizes (called flakes). Grinding of manufacturing trimmings and post-consumer packaging into flakes is a common step in recycling operations.

Once the crushed complex sheets are ready, the method is developed in three stages, known in the state of the art: breaking up of the sheets, physical separation and subsequent treatment of the single sheets obtained.

The first stage, or breaking stage, is the most relevant, as it is that which presents the greatest technical difficulties. By carrying out this stage, one goes from having complex films consisting of at least two layers of polymer adhered to each other, to having single films of one or the other polymer. The method of treatment of complex films proposed by the present invention is essentially characterised in that the agents for breaking down the complex films are at least one acidic agent and at least one caustic agent. In a preferred embodiment, the acidic agent is a compound of at least one dicarboxylic acid (HOOC-R-COOH) and at least one fatty acid (R-COOH). In a more preferred embodiment, the at least one dicarboxylic acid is oxalic acid (HOOC-COOH) and the at least one fatty acid is oleic acid (C18H34O2). In a preferred embodiment, the at least one caustic agent is selected from the group consisting of caustic soda (NaOH) and caustic potash (KHO).

The complex sheet rupture stage comprises the sub-steps of:
- Subject the complex films to an initial shaking bath in a container of hot water containing a solution of a dicarboxylic acid which is oxalic acid and a fatty acid, which is oleic acid.
- Passing the sheets through mechanical means of reducing the liquid content, by which is meant any mechanical means by which the liquid in which the sheets are impregnated after having been immersed in water can be substantially removed. Preferably such means are a centrifuge.
- The sheets are subjected to a second shaker bath in a hot water tank with a caustic agent selected from caustic soda and caustic potash. In a more preferred embodiment, a surfactant is added to this second shaker bath.

With the above operations, the material has been broken up. The next stage is the physical separation of the resulting single sheets, which involves subjecting them to at least one densifying bath, after which the flakes of the two polymers can be extracted separately.

From here on, the flakes of one and the other polymer will be treated separately, focusing the method, in the proposed embodiment, on the treatment of PET flakes, which have a higher commercial value and high regulatory requirements for their recovery.

### Brief description of drawings

The description is supplemented by a drawing which is illustrative and non-limiting in nature and depicts the following:

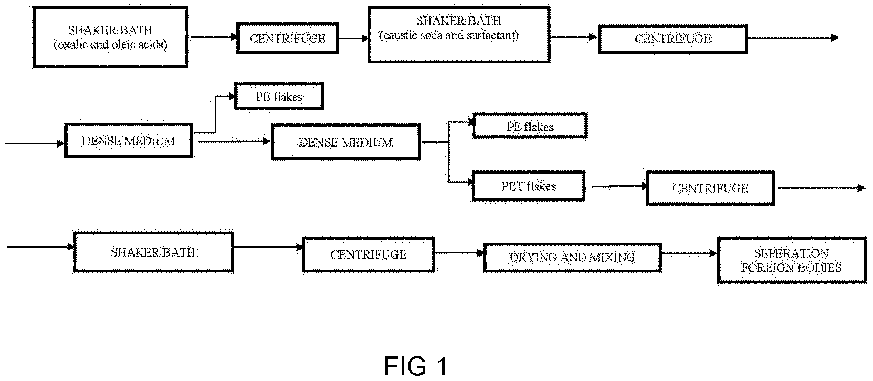

Figure 1.- Sequence of operations for the treatment of complex laminates.

### Description of embodiments

In a preferred embodiment, the complex films used in the method consist of a polyethylene terephthalate (PET) film and a polyethylene (PE) layer, bonded with ethylene vinyl acetate (EVA) or an acrylic adhesive. An ethyl vinyl alcohol (EVOH) layer may have been applied between the adhesive and the PE layer, or an additional layer of adhesive may have been applied between the adhesive and the PE layer, without affecting the method and the results obtained.

The complex films to be treated are in the form of flakes, with an approximate size of 12 to 15 millimetres. In this example, a quantity of approximately 600 kilograms of these flakes is treated.

In a first stage, the flakes are broken up. For this purpose, a vessel with a means, known in the art, of shaking is used, which normally consists of a conical cylindrical metal tank inside which, in the part corresponding to the conical apex, propellers are arranged.

For the indicated amount of flakes, the tank is filled with approximately 2.5 m3 of water at a temperature between 80° and 90°. Oxalic acid and oleic acid are added to the water. The oxalic acid is administered already dissolved in water, preferably in a 10% solution. Solutions of oxalic acid are commercially available. In one embodiment, between 12.5 and 37.5 litres of 10% solution are administered, resulting in a concentration of between 500 ppm and 1500 ppm oxalic acid in the water tank. In a more preferred embodiment, 25 litres of 10% solution, i.e., a concentration of 1000 ppm oxalic acid is administered into the water tank. In one embodiment, 2.5 to 7.5 litres of oleic acid (1000 - 3000 ppm in the water tank) are added. In a more preferred embodiment, the dose of oleic acid is 5 litres, i.e. at a concentration of 2000 ppm in the water tank.

The 600 kg of flakes are immersed in the tank and subjected to a shaker bath for approximately thirty minutes.

When the bath is finished, the flakes are removed from the tank and introduced into a means of reducing the liquid element, preferably a horizontal centrifugal machine of the kind existing in the state of the art, in which the material is fed in at one end and then comes out at the other end. In these machines, the flakes will never come out completely dry, but with a moisture content of about 1.5%.

The flakes are then taken to a second bath in another shaker tank with the same characteristics as the one described above and with the same volume of approximately 2.5 m3 of water, in this case at a temperature between 70° and 95°. A caustic agent selected from the group consisting of caustic soda and caustic potash is dissolved in the water, in both cases with a concentration of between 1% and 5%, and most preferably 2%.

In a preferred embodiment, a surfactant, commonly used for washing PET bottles, is also added to the aforementioned breaking agent. The approximate dosage of the surfactant is 1ml per litre of water (1000 ppm). This second shaking bath lasts approximately 30 minutes.

The mechanical friction inside the shaker tank, and the breaking agents used, will result in that, where there was a mass of complex PET and PE sheets, there is now a mass of single PET and PE sheets mixed inside the tank.

The next step is the physical separation of the PET and PE flakes inside the tank where they have been subjected to the second shaker bath. For this purpose, the combined mass of flakes is extracted and returned to the centrifuge.

Subsequently, they are subjected to a first densification bath, after which the PE flakes, which will have remained floating on the surface of the water, will be removed. However, PE flakes will remain on the bottom, mixed with the PET flakes, so a second densification bath will be applied, which will ensure that the remaining PE flakes on the bottom of the tank rise to the surface, after which they can be removed, and the PET flakes can be collected.

From this point on, the flakes of one material and the other will be treated separately.

As for the PE flakes, they are accumulated and when an amount considered sufficient is achieved, they are dried and agglomerated. This is the end of the treatment of the flakes of this material.

The remaining steps of the method are directed to the treatment of the PET flakes, which is carried out according to the following sub-steps:
- The PET flakes, which are wet after the densification baths, are fed into the centrifuge.
- They are subjected to a shaker bath in clean cold water, from which the material will be free of any chemical residues. The pH of the flakes after this bath shall be approximately 7-8.
- The flakes are passed through a centrifuge again.
- They are loaded into a container with means of mixing and drying, e.g., a mixing and drying silo known in the state of the art. The moisture content of the flakes after this treatment should be below 1%, preferably below 0.7%.
- Once removed from the silo, they are subjected to a particle separating device known in the state of the art. Depending on the type of separator used, foreign particles such as coloured particles, metals or plastics other than PET can be separated.

## Claims

1. A method of treating complex sheets, composed of multiple single sheets of two different polymers to recover the single sheets constituting said complex sheet;
the complex sheets comprising at least:
- a first single sheet of a polymer being polyethylene terephthalate (PET),
- a second single sheet of a polymer being polyethylene (PE) and
- one layer of adhesive between the first and second single sheets of a polymer being ethylene vinyl acetate (EVA) or acrylic adhesive;
the method comprising the steps of:
a) breaking up the complex sheets,
b) separating the single sheets and
c) further treating at least one of the at least two single sheets;
**characterised in that** step (a) comprises the sub-steps of:
i) subjecting the complex sheets in the form of flakes to an initial shaking bath at a temperature between 80°C and 90°C in an aqueous solution of oxalic acid in a concentration between 500 ppm and 1500 ppm, and oleic acid in a concentration between 1000 and 3000 ppm;
ii) passing the sheets resulting from step (i) through mechanical means of reducing their liquid content;
iii) subjecting the sheets resulting from step (ii) to a second shaking bath at a temperature between 70°C and 95°C in an aqueous caustic agent solution selected form caustic soda and caustic potash in a concentration between 1% and 5% weight percent.

2. Method of treatment of complex sheets according to claim 1, **characterized in that** the flakes have an approximate size of 12 to 15 millimetres.

3. Method of treating complex sheets according to claim 1, **characterised in that** a surfactant is also added to the second shaking bath of sub-step (iii).

4. Method of treating complex sheets according to claim 1, **characterised in that** the separation step (b) comprises the sub-steps of:
i) subjecting the complex sheets to liquid element reduction means;
ii) subjecting them to at least one densifying bath; and
iii) separately extracting the resulting single sheets.

5. Method of treating complex sheets according to claim 1, **characterised in that** the single sheet of a polymer that undergoes further treatment as per step c) is the polyethylene terephthalate (PET) sheet.

6. Method of treating complex sheets according to claim 5, **characterised in that** the further treatment of the polyethylene terephthalate (PET) sheets comprises the sub-steps of: subjecting them to a shaking bath in water and placing them in a container with mixing means and drying means.

7. Method of treatment of complex sheets according to claim 6 **characterised in that** before and after subjecting the PET sheets to the shaking bath in water, means of reducing the liquid element present in the sheets are applied to them.

8. Method of processing complex sheets according to any of claims 1 and 7, **characterised in that** the means of reducing the liquid element are centrifuge.

9. Method of processing complex sheets according to claim 6 **characterised in that** after depositing the PET sheets in the container with mixing and drying means, they are passed through a foreign particle detection device.

10. Method of treating complex sheets according to any of the preceding claims, **characterised in that** the concentration of oleic acid used in step (a), sub-step (i), of claim 1 is 2000 ppm.

11. Method of treatment of complex sheets according to any of the preceding claims, **characterised in that** the concentration of oxalic acid used in step (a), sub-step (i), of claim 1 is 1000 ppm.

12. Method of treatment of complex sheets according to any of the preceding claims, **characterised in** the concentration of the caustic agent solution selected from caustic soda and caustic potash used in step (a), sub-step (iii) of claim 1 is, in both cases, a concentration of 2%.

13. Method of treatment of complex sheets according to any of the preceding claims, **characterised in that** the shaking bath in step (a), sub-step (i) of claim 1 is performed during approximately thirty minutes.

14. Method of treatment of complex sheets according to any of the preceding claims, **characterized in that** the shaking bath in step (a), sub-step (iii) of claim 1 is performed during approximately thirty minutes.

## Patentansprüche

1. Verfahren zur Behandlung von Verbundfolien, die aus mehreren Einzelfolien aus zwei verschiedenen Polymeren bestehen, zur Rückgewinnung der Einzelfolien, aus denen die jeweilige Verbundfolie zusammengesetzt ist; wobei die Verbundfolien mindestens umfassen:
- eine erste Einzelfolie aus einem Polymer, nämlich Polyethylenterephthalat (PET),
- eine zweite Einzelfolie aus einem Polymer, nämlich Polyethylen (PE), und
- eine Klebstoffschicht zwischen der ersten und der zweiten Einzelfolie, bestehend aus Ethylenvinylacetat (EVA) oder einem Acrylklebstoff;
wobei das Verfahren folgende Schritte umfasst:
a) Zerkleinerung der Verbundfolien,
b) Trennung der Einzelfolien und
c) weitere Behandlung von mindestens einer der mindestens zwei Einzelfolien;
**dadurch gekennzeichnet, dass** Schritt (a) folgende Teilschritte umfasst:
i) Unterwerfen der in Flockenform vorliegenden Verbundfolien einem ersten Schüttelbad bei einer Temperatur zwischen 80 °C und 90 °C in einer wässrigen Lösung aus Oxalsäure in einer Konzentration zwischen 500 und 1500 ppm sowie Ölsäure in einer Konzentration zwischen 1000 ppm und 3000 ppm.
ii) Leiten der sich aus Schritt (i) ergebenden Folien durch mechanische Mittel zur Reduktion des Flüssigkeitsgehalts.
iii) Unterwerfen der sich aus Schritt (ii) ergebenden Folien einem zweiten Schüttelbad bei einer Temperatur zwischen 70 °C und 95 °C in einer wässrigen Lösung eines alkalischen Mittels, ausgewählt aus Natronlauge und Kalilauge, in einer Konzentration zwischen 1 und 5 Gewichtsprozent.

2. Verfahren zur Behandlung von Verbundfolien gemäß Anspruch 1, **dadurch gekennzeichnet, dass** die Flocken eine ungefähre Größe von 12 bis 15 Millimetern aufweisen.

3. Verfahren zur Behandlung von Verbundfolien gemäß Anspruch 1, **dadurch gekennzeichnet, dass** dem zweiten Schüttelbad des Teilschritts (iii) zusätzlich ein Tensid zugesetzt wird.

4. Verfahren zur Behandlung von Verbundfolien gemäß Anspruch 1, **dadurch gekennzeichnet, dass** der Trennungsschritt (b) folgende Teilschritte umfasst:
i) Unterwerfen der Verbundfolien Mitteln zur Reduktion des Flüssigkeitsgehalts;
ii) unterwerfen in mindestens einem Dichtebad; sowie
iii) separates Herauslösen der daraus resultierenden Einzelfolien.

5. Verfahren zur Behandlung von Verbundfolien gemäß Anspruch 1, **dadurch gekennzeichnet, dass** die Einzelfolie aus Polyethylenterephthalat (PET) die Folie ist, die gemäß Schritt c) einer weiteren Behandlung unterzogen wird.

6. Verfahren zur Behandlung von Verbundfolien gemäß Anspruch 5, **dadurch gekennzeichnet, dass** die weitere Behandlung der PET-Folien folgende Teilschritte umfasst: Unterwerfen der Folien einem Schüttelbad in Wasser sowie Einbringen in einen Behälter mit Mischvorrichtung und Trocknungseinrichtung.

7. Verfahren zur Behandlung von Verbundfolien gemäß Anspruch 6, **dadurch gekennzeichnet, dass** vor und nach dem Schüttelbad in Wasser Mittel zur Reduktion des Flüssigkeitsgehalts auf die PET-Folien angewendet werden.

8. Verfahren zur Behandlung von Verbundfolien gemäß einem der Ansprüche 1 bis 7, **dadurch gekennzeichnet, dass** die Mittel zur Reduktion des Flüssigkeitsgehalts eine Zentrifuge sind.

9. Verfahren zur Behandlung von Verbundfolien gemäß Anspruch 6, **dadurch gekennzeichnet, dass** die PET-Folien nach dem Einbringen in den Behälter mit Misch- und Trocknungseinrichtung durch ein Gerät zur Erkennung von Fremdpartikeln geführt werden.

10. Verfahren zur Behandlung von Verbundfolien gemäß einem der vorhergehenden Ansprüche, **dadurch gekennzeichnet, dass** die Konzentration der im Schritt (a), Teilschritt (i) gemäß Anspruch 1 verwendeten Ölsäure 2000 ppm beträgt.

11. Verfahren zur Behandlung von Verbundfolien gemäß einem der vorhergehenden Ansprüche, **dadurch gekennzeichnet, dass** die Konzentration der im Schritt (a), Teilschritt (i) gemäß Anspruch 1 verwendeten Oxalsäure 1000 ppm beträgt.

12. Verfahren zur Behandlung von Verbundfolien gemäß einem der vorhergehenden Ansprüche, **dadurch gekennzeichnet, dass** die Konzentration der im Schritt (a), Teilschritt (iii) gemäß Anspruch 1 verwendeten Lösung eines alkalischen Mittels, ausgewählt aus Natronlauge und Kalilauge, in beiden Fällen 2 % beträgt.

13. Verfahren zur Behandlung von Verbundfolien gemäß einem der vorhergehenden Ansprüche, **dadurch gekennzeichnet, dass** das Schüttelbad im Schritt (a), Teilschritt (i) gemäß Anspruch 1 für etwa dreißig Minuten durchgeführt wird.

14. Verfahren zur Behandlung von Verbundfolien gemäß einem der vorhergehenden Ansprüche, **dadurch gekennzeichnet, dass** das Schüttelbad im Schritt (a), Teilschritt (iii) gemäß Anspruch 1 für etwa dreißig Minuten durchgeführt wird.

## Revendications

1. Procédé de traitement de feuilles complexes, composées de multiples feuilles simples de deux polymères différents, pour récupérer les feuilles simples constituant ladite feuille complexe ; les feuilles complexes comprenant au moins :
- une première feuille simple d'un polymère étant du téréphtalate de polyéthylène (PET),
- une seconde feuille simple d'un polymère étant du polyéthylène (PE), et
- une couche d'adhésif entre les première et seconde feuilles simples d'un polymère étant de l'éthylène-acétate de vinyle (EVA) ou un adhésif acrylique ;
le procédé comprenant les étapes consistant à :
a) décomposer les feuilles complexes,
b) séparer les feuilles simples, et
c) traiter complémentairement au moins une des au moins deux feuilles simples ;
le procédé étant **caractérisé en ce que** l'étape (a) comprend les sous-étapes consistant à :
i) soumettre les feuilles complexes sous la forme de flocons à un bain d'agitation initial à une température comprise entre 80 °C et 90 °C dans une solution aqueuse d'acide oxalique à une concentration comprise entre 500 ppm et 1500 ppm et d'acide oléique à une concentration comprise entre 1000 ppm et 3000 ppm ;
ii) faire passer les feuilles obtenues à l'étape (i) par des moyens mécaniques permettant de réduire leur teneur en liquide ;
iii) soumettre les feuilles obtenues à l'étape (ii) à un second bain d'agitation à une température comprise entre 70 °C et 95 °C dans une solution aqueuse d'agent caustique choisie parmi la soude caustique et la potasse caustique à une concentration comprise entre 1 % et 5 % en poids.

2. Procédé de traitement de feuilles complexes selon la revendication 1, **caractérisé en ce que** les flocons ont une taille approximative de 12 à 15 millimètres.

3. Procédé de traitement de feuilles complexes selon la revendication 1, **caractérisé en ce qu'**un agent tensio-actif est également ajouté au second bain d'agitation de la sous-étape (iii).

4. Procédé de traitement de feuilles complexes selon la revendication 1, **caractérisé en ce que** l'étape de séparation (b) comprend les sous-étapes consistant à :
i) soumettre les feuilles complexes à des moyens de réduction d'élément liquide ;
ii) les soumettre à au moins un bain de densification ; et
iii) extraire séparément les feuilles simples obtenues.

5. Procédé de traitement de feuilles complexes selon la revendication 1, **caractérisé en ce que** la feuille simple d'un polymère qui subit un traitement complémentaire selon l'étape c) est la feuille de téréphtalate de polyéthylène (PET).

6. Procédé de traitement de feuilles complexes selon la revendication 5, **caractérisé en ce que** le traitement complémentaire des feuilles de téréphtalate de polyéthylène (PET) comprend les sous-étapes consistant à : les soumettre à un bain d'agitation dans de l'eau et les placer dans un récipient muni de moyens de mélange et de moyens de séchage.

7. Procédé de traitement de feuilles complexes selon la revendication 6, **caractérisé en ce qu'**avant et après avoir soumis les feuilles de PET au bain d'agitation dans de l'eau, des moyens permettant de réduire l'élément liquide présent dans les feuilles sont appliqués à celles-ci.

8. Procédé de traitement de feuilles complexes selon l'une quelconque des revendications 1 et 7, **caractérisé en ce que** les moyens permettant de réduire l'élément liquide sont une centrifugeuse.

9. Procédé de traitement de feuilles complexes selon la revendication 6, **caractérisé en ce qu'**après avoir déposé les feuilles de PET dans le récipient muni de moyens de mélange et de séchage, celles-ci sont acheminées à travers un dispositif de détection de particules étrangères.

10. Procédé de traitement de feuilles complexes selon l'une quelconque des revendications précédentes, **caractérisé en ce que** la concentration de l'acide oléique utilisé à l'étape (a), sous-étape (i), de la revendication 1 est de 2000 ppm.

11. Procédé de traitement de feuilles complexes selon l'une quelconque des revendications précédentes, **caractérisé en ce que** la concentration de l'acide oxalique utilisé à l'étape (a), sous-étape (i), de la revendication 1 est de 1000 ppm.

12. Procédé de traitement de feuilles complexes selon l'une quelconque des revendications précédentes, **caractérisé en ce que** la concentration de la solution d'agent caustique choisie parmi la soude caustique et la potasse caustique utilisée à l'étape (a), sous-étape (iii), de la revendication 1, est, dans les deux cas, une concentration de 2 %.

13. Procédé de traitement de feuilles complexes selon l'une quelconque des revendications précédentes, **caractérisé en ce que** le bain d'agitation à l'étape (a), sous-étape (i), de la revendication 1 est réalisé pendant environ trente minutes.

14. Procédé de traitement de feuilles complexes selon l'une quelconque des revendications précédentes, **caractérisé en ce que** le bain d'agitation à l'étape (a), sous-étape (iii), de la revendication 1 est réalisé pendant environ trente minutes.
